# EUROPEAN PATENT APPLICATION

(11) **EP 4 461 116 A1**
(43) Date of publication of application: **13.11.2024**
(21) Application number: 23762922.5
(22) Date of filing: 01.03.2023
(51) Int. Cl.: A01D 34/63, A01D 41/12, A01D 67/00, A01D 45/00

(54) **OFF-GROUND DETECTION DEVICE AND HARVESTER**

(30) Priority: 04.03.2022 CN 202210213449; 04.03.2022 CN 202220472917 U
(71) Applicant: Shenzhen Mammotion Innovation Co., Limited, Shenzhen, Guangdong 518000 (CN)
(72) Inventor: XU, Yuanjun, Shenzhen, Guangdong 518000 (CN); CHEN, Shaojie, Shenzhen, Guangdong 518000 (CN); WANG, Ben, Shenzhen, Guangdong 518000 (CN)
(74) Representative: RGTH
(86) International application number: PCT/CN2023/079052
(87) International publication number: WO 2023/165524

(57) **Abstract**

An off-ground detection device (1) and a harvester (1000). The off-ground detection device (1) includes a frame (10) and a travel mechanism (20), wherein the travel mechanism (20) is movably arranged on the frame (10), and the travel mechanism (20) has a first position (P1) and a second position (P2) relative to the frame (10). When the travel mechanism (20) is in the first position (P1), the harvester (1000) stops operating, and when the travel mechanism (20) is in the second position (P2), the state of the harvester (1000) remains unchanged. In the present application, when the travel mechanism (20) is in the first position (P1), the harvester (1000) stops operating when the travel mechanism (20) is in an abnormal state, so as to avoid a safety accident during use of the harvester (1000), thereby improving the safety of the harvester (1000) in an operating state.

## Description

### Technical Field

The present application relates to the field of automatic detection technology, and in particular to an off-ground detection device and a harvester.

### Background Art

With the increase in the types of harvesters, the harvesters available on the market are of more varying qualities. How to improve the safety of the harvesters in an operating state has become a technical problem to be solved.

### Summary of the Invention

An objective of the present application is to provide an off-ground detection device and a harvester, in order to solve the technical problem of how to improve the safety of the harvester in an operating state.

In a first aspect, the present application provides an off-ground detection device applicable to a harvester, the off-ground detection device including:
a frame; and
a travel mechanism movably arranged on the frame, the travel mechanism movably having a first position and a second position relative to the frame, wherein when the travel mechanism is in the first position, the harvester stops operating; and when the travel mechanism is in the second position, the state of the harvester remains unchanged.

The travel mechanism includes a sliding structure and a travel structure, wherein the sliding structure is slidably arranged on the frame, and the sliding structure has the first position and the second position relative to the frame; and the travel structure is rotatably connected to the sliding structure, wherein when the sliding structure is in the first position, the harvester stops operating, and when the sliding structure is in the second position, the state of the harvester remains unchanged.

The travel structure includes a connecting member and a travel wheel, wherein the connecting member is rotatably connected to the sliding structure, and an end of the connecting member away from the sliding structure is movably connected to the travel wheel.

The travel structure includes a first travel structure and a second travel structure respectively arranged on opposite sides of the sliding structure, wherein when the first travel structure moves toward the second position relative to the sliding structure, the second travel structure moves toward the first position relative to the sliding structure, such that both a travel wheel of the first travel structure and a travel wheel of the second travel structure abut against a travel road, the sliding structure is in a third position, and the harvester is maintained in the operating state, the third position being located between the first position and the second position.

The sliding structure includes a slider and a rotating shaft, wherein the rotating shaft is connected to the slider, and the rotating shaft is rotatably connected to the travel structure, such that the travel structure is rotatable relative to the sliding structure.

The off-ground detection device further includes a cushion structure, wherein the cushion structure is fixed to the frame and connected to the connecting member to cushion an impact on the travel mechanism; and
the cushion structure includes a cushion mount and an elastic member, the cushion mount being connected to the frame and the elastic member, and the elastic member being connected to the connecting member and cushioning the impact on the travel mechanism.

The frame has a sliding space extending in an arrangement direction of the first position and the second position, and a slider is slidably arranged inside the sliding space and is slidable between the first position and the second position.

The off-ground detection device further includes a sensor and a controller, wherein the sensor is electrically connected to the controller and is configured to send a first signal when the travel mechanism is in the first position, and the controller is configured to control the harvester to stop operating according to the first signal.

The travel wheel includes a hub motor and a tyre, wherein the hub motor has an outer peripheral surface and at least one protrusion located on the outer peripheral surface, and the tyre has an inner peripheral surface and at least one groove located on the inner peripheral surface; and the tyre is sleeved on the outer peripheral surface of the hub motor, and the protrusion is clamped in the groove.

In a second aspect, the present application provides a harvester including the off-ground detection device and a cutter deck structure, wherein the cutter deck structure is mounted on the frame and is configured for harvesting.

In the present application, the travel mechanism of the off-ground detection device has the first position and the second position relative to the frame, and when the travel mechanism is in the first position, the harvester stops operating when the travel mechanism is in an abnormal state, so as to avoid a safety accident during use of the harvester, thereby improving the safety of the harvester in the operating state.

### Brief Description of the Drawings

To describe the technical solutions in the embodiments of the present application more clearly, the drawings required for illustration of the embodiments of the present application will be briefly introduced below. Obviously, the drawings in the following description are only for some of the embodiments of the present application, and for those of ordinary skill in the art, other drawings can also be obtained from these drawings without any creative effort.

In order to describe the technical solutions in the embodiments of the present application more clearly, the drawings required for illustration of the embodiments will be briefly introduced below. Obviously, the drawings in the following description are only for some of the embodiments of the present application, and for those of ordinary skill in the art, other drawings can also be obtained from these drawings without any creative effort.
FIG. 1 is a schematic diagram of a structure of a harvester according to an embodiment of the present application;
FIG. 2 is a first schematic diagram of a structure of an off-ground detection device according to an embodiment of the present application;
FIG. 3 is a second schematic diagram of a structure of an off-ground detection device according to an embodiment of the present application;
FIG. 4 is a schematic bottom diagram of a structure of a harvester according to an embodiment of the present application;
FIG. 5 is a schematic diagram of a structure of a cutter deck structure according to an embodiment of the present application;
FIG. 6 is a schematic partial cross-sectional view of the off-ground detection device according to an embodiment of the present application;
FIG. 7 is a schematic diagram of a partial structure of a travel mechanism according to an embodiment of the present application; and
FIG. 8 is a schematic diagram of a structure of a travel wheel according to an embodiment of the present application.

Description of reference signs: harvester - 1000, off-ground detection device - 1, frame - 10, frame body - 11, guide member - 12, sliding space - 13, travel mechanism - 20, sliding structure - 21, slider - 211, rotating shaft - 212, travel structure - 22, first travel structure - 221, second travel structure - 222, connecting member - 223, first connecting member - 2231, second connecting member - 2232, travel wheel - 224, first travel wheel - 2241, second travel wheel - 2242, hub motor - 225, protrusion - 2250, motor body - 2251, hub cap - 2252, tyre - 226, groove - 2260, sensor - 30, cushion structure - 40, cushion mount - 41, elastic member - 42, cutter deck structure - 3, blade - 31, cutter deck holder - 32, controller - 50, first position - P1, second position - P2.

### Detailed Description of Embodiments

The technical solutions in the embodiments of the present application will be described clearly and completely below with reference to the drawings in the embodiments of the present application. Obviously, the embodiments as described are only some of the embodiments of the present application, rather than all the embodiments. Based on the embodiments of the present application, all other embodiments obtained by those of ordinary skill in the art without any creative effort shall fall within the scope of protection of the present application.

The phrase "embodiment" or "embodiments" mentioned herein means that the specific features, structures or characteristics described with reference to the embodiment or embodiments may be included in at least one embodiment of the present application. This phrase in various places in the specification does not necessarily refer to the same embodiment or an independent or alternative embodiment exclusive of other embodiments. It should be appreciated explicitly or implicitly by those skilled in the art that the embodiments described herein can be combined with other embodiments.

It should be noted that the terms "first", "second" and so on in the specification, the claims and the drawings of the present application are intended to distinguish different objects, rather than to describe a specific order. In addition, the terms "include" and "have" and any variations thereof are intended to cover a non-exclusive inclusion.

With the continuous increase of urban green coverage, more and more lawns need to be maintained. However, the problem of labour shortage is increasingly serious due to issues such as the aging of population. In order to liberate labour, harvesters for automatic lawn mowing gradually become popular. For the harvester's operating environment on the grass, the following functions need to be fulfilled: since the grass is uneven, and there are grass roots and various obstacles such as small stones and tree stumps on the grass, the harvester needs to be able to adapt to various road conditions when running on a lawn to ensure the passability, and thus the harvester needs to have a good cross-country capability; and during lawn mowing with the harvester, it is necessary to be able to stop the high-speed rotating cutter deck in an emergency, and when the harvester probably falls from a discontinuous surface or is lifted off the ground by an unrelated person or other external force, it is necessary to be able to detect this abnormal state and stop operating of the harvest, in order to avoid a safety accident.

With the increase in the types of harvesters, the harvesters available on the market are of more varying qualities, and safety problems are the most important issue. How to improve the safety of the harvesters in an operating state has become a technical problem to be solved.

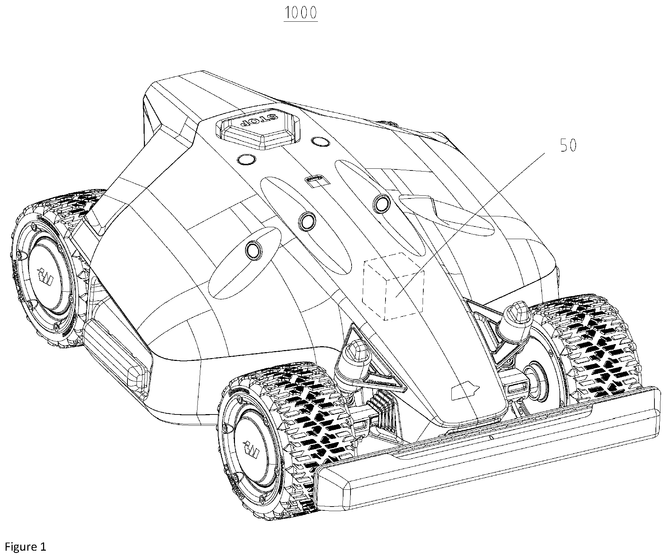

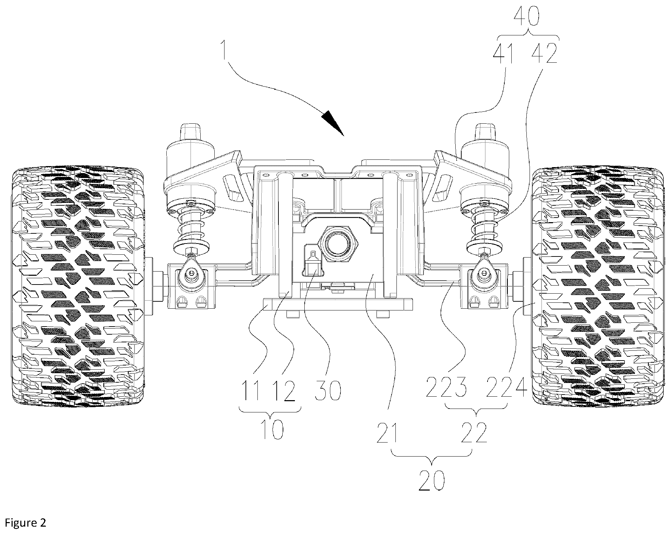

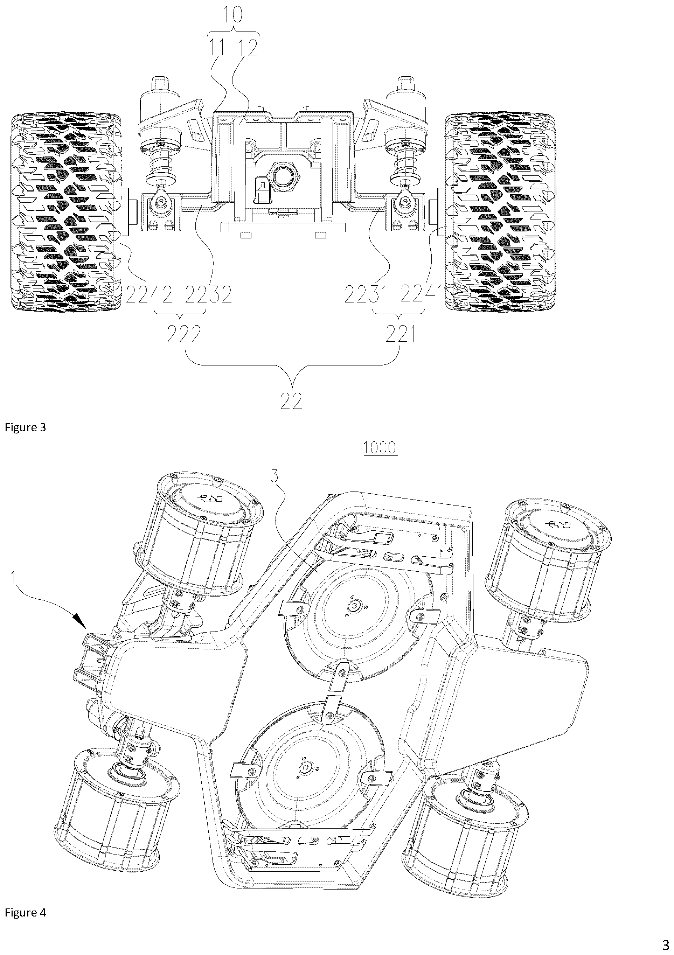

Reference is made to FIGS. 1, 2 and 4. FIG. 1 is a schematic diagram of a structure of a harvester according to an embodiment of the present application, and the harvester 1000 mentioned below may be described with reference to FIG. 1; FIG. 2 is a first schematic diagram of a structure of an off-ground detection device according to an embodiment of the present application, and FIG. 4 is a schematic bottom diagram of a structure of a harvester according to an embodiment of the present application. The harvester 1000 according to the present application includes an off-ground detection device 1 and a cutter deck structure 3. The cutter deck structure 3 is mounted on the harvester 1000, and the cutter deck structure 3 is configured for harvesting. Optionally, the uses of the cutter deck structure 3 include, but are not limited to, mowing, and the cutter deck structure 3 may also be used for harvesting other plants such as rice and wheat.

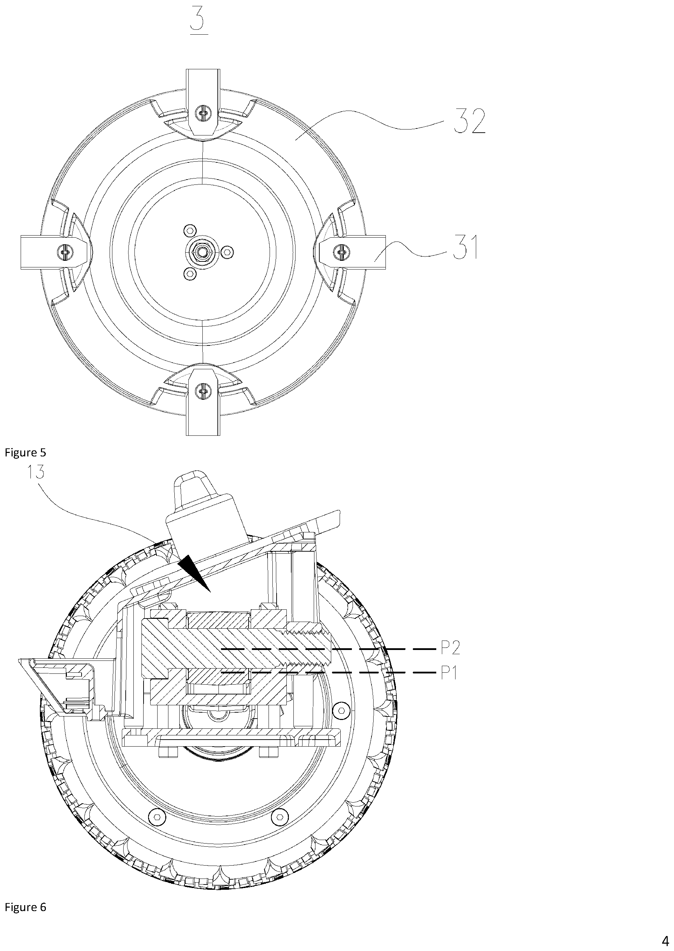

Referring to FIG. 5, FIG. 5 is a schematic diagram of a structure of a cutter deck structure according to an embodiment of the present application. The cutter deck structure 3 further includes at least one blade 31 and a cutter deck holder 32, and the blade 31 is arranged on an outer periphery of the cutter deck holder 32 and at least partially exposed from the outer periphery of the cutter deck holder 32.

The blade 31 is rotatably connected to the cutter deck holder 32, and when the cutter deck holder 32 rotates, the blade 31 is radially arranged under the action of a centrifugal force. Since the blade 31 is rotatably connected to the cutter deck holder 32, when the blade 31 hits a relatively hard external object such as a stone during operating, the blade 31 can rotate to prevent the blade 31 from being severely damaged.

Referring to FIGS. 2, 4 and 6, the off-ground detection device 1 includes a frame 10 and a travel mechanism 20. The travel mechanism 20 is movably arranged on the frame 10, and the travel mechanism 20 has a first position P1 and a second position P2 relative to the frame 10. When the travel mechanism 20 is in the first position P1, the harvester 1000 stops operating; and when the travel mechanism 20 is in the second position P2, the state of the harvester 1000 remains unchanged.

Specifically, when the off-ground detection device 1 is used in the harvester 1000 and the harvester 1000 is placed on a road, the first position P1 is a position close to the road, and the second position P2 is a position away from the road.

Specifically, the first position P1 and the second position P2 are spaced apart by a distance, the first position P1 is located on a side of the frame 10 close to the bottom of the frame 10, and the second position P2 is located on a side of the frame 10 close to the top of the frame 10.

Optionally, referring to FIGS. 2 and 3, when the harvester 1000 is on a horizontal travel road, the direction from the first position P1 to the second position P2 on the frame 10 is referred to as a first direction.

Optionally, the horizontal travel road includes, but is not limited to, horizontal ground, a horizontal desktop, or other environments.

When the travel mechanism 20 is in the first position P1 on the frame 10, the harvester 1000 in an operating state stops operating, and the harvester 1000 in a stop state continues to stop operating. When the travel mechanism 20 is in the second position P2, the state of the harvester 1000 remains unchanged. It should be noted that in the case where the harvester 1000 is in the stop state, when the travel mechanism 20 is in the second position P2 on the frame 10, the harvester 1000 is still in the stop state; and in the case where the harvester 1000 is in the operating state, when the travel mechanism 20 is in the second position P2, the harvester 1000 is still in the operating state.

It can be noted that, optionally, the harvester 1000 being in the operating state refers to but not limited to the cutter deck structure 3 being in an operating state, and the cutter deck structure 3 being in the operating state refers to but not limited to the cutter deck holder 32 or the blade 31 being in a rotating state.

Specifically, in an embodiment, when the travel mechanism 20 of the harvester 1000 travels on the horizontal travel road, the horizontal travel road provides support for the travel mechanism 20, such that the travel mechanism 20 has a relatively stable structure, and the height of the travel mechanism 20 relative to the horizontal travel road remains unchanged. Since the frame 10 is movably connected to the travel mechanism 20, the frame 10 moves toward the horizontal travel road due to its own gravity, such that the travel mechanism 20 moves toward the second position P2 on the frame 10. When the travel mechanism 20 is in the second position P2, the positional relationship between the frame 10 and the travel mechanism 20 is relatively stable, that is, the height and the structure of the harvester 1000 in the first direction are relatively stable.

In an embodiment, when the travel mechanism 20 of the harvester 1000 travels to a height-discontinuous surface similar to a step and then the travel mechanism 20 is in a suspended state, the travel mechanism 20 moves toward the travel road relative to the frame 10 due to its own gravity, and the travel mechanism 20 moves toward the first position P1 on the frame 10. When the travel mechanism 20 is in the first position P1, the harvester 1000 stops operating.

Optionally, the travel road includes, but is not limited to, a discontinuous surface of a step, a deep pit in the ground, etc.

In another embodiment, when the harvester 1000 in the operating state is lifted by an operator, the frame 10 is subjected to a pulling force provided by the operator and moves away from the horizontal travel road, such that the travel mechanism 20 moves toward the first position P1 until the travel mechanism 20 is in the first position P1, at which time the harvester 1000 stops operating. It should be noted that in an embodiment when the harvester 1000 in the operating state is lifted by the operator and then the travel mechanism 20 is off the horizontal travel road and suspended, the travel mechanism 20 moves to the first position P1 of the frame 10 to stop the harvester 1000 from operating. In another embodiment, when the harvester 1000 in the operating state is lifted by the operator but the travel mechanism 20 is not off the horizontal travel road, the travel mechanism 20 also moves to the first position P1 of the frame 10 to stop the harvester 1000 from operating.

In the present application, the travel mechanism 20 of the off-ground detection device 1 has the first position P1 and the second position P2 relative to the frame 10, and when the travel mechanism 20 is in the first position P1, the harvester 1000 stops operating when the travel mechanism 20 is in an abnormal state, so as to avoid a safety accident during use of the harvester 1000, thereby improving the safety of the harvester 1000 in the operating state.

Optionally, the number of the travel mechanisms 20 in the harvester 1000 may be but not limited to one, two, three, etc. In an embodiment, two travel mechanisms 20 are provided in the harvester 1000, and the two travel mechanisms 20 are spaced apart and arranged at opposite ends of the frame 10.

Reference is made to FIGS. 2 and 6. FIG. 6 is a schematic cross-sectional view of the off-ground detection device according to an embodiment of the present application. The frame 10 has a sliding space 13, the sliding space 13 extends in an arrangement direction of the first position P1 and the second position P2, the travel mechanism 20 is at least partially arranged inside the sliding space 13, and at least part of the travel mechanism 20 is slidable between the first position P1 and the second position P2.

Specifically, referring to FIG. 2 again, the frame 10 includes a frame body 11 and a guide member 12. The guide member 12 extends in a direction from the first position P1 to the second position P2. The frame body 11 and the guide member 12 enclose the sliding space 13, the travel mechanism 20 movably passes through the sliding space 13, and the guide member 12 is configured to enable the at least part of the travel mechanism 20 to slide between the first position P1 and the second position P2.

Optionally, the guide member 12 includes, but is not limited to, a guide rod, a slide rail, or other sliding-type components.

In an embodiment, four guide members 12 are provided. Optionally, one, two, three, five, ten, or a different number of guide members 12 may also be provided.

In an embodiment, the guide member 12 is a metal post. Optionally, the guide member 12 may also be a non-metallic post, and the guide member 12 is made of a material including, but not limited to, plastic, synthetic rubber, synthetic fibre or other types of materials.

It should be noted that the guide member 12 in the sliding space 13 is fixedly connected to the frame 10. At least part of the travel mechanism 20 is slidable in the guiding space along the guide member 12. In other words, the frame 10 is also movable toward the horizontal travel road relative to the travel mechanism 20 (i.e., the frame 10 drives the guide member 12 to move toward the horizontal travel road along the travel mechanism 20).

Optionally, the guide member 12 is fixedly connected to the frame 10 in a manner including, but not limited to, threaded connection, snap-fit connection, and riveting.

Specifically, the sliding space 13 provides a moving space for the at least part of the travel mechanism 20, and the sliding space 13 extends in the arrangement direction of the first position P1 and the second position P2, so as to facilitate movement of the travel mechanism 20 to the first position P1 and the second position P2 on the frame 10. The guide member 12 is arranged inside the sliding space 13 to ensure the travel mechanism 20 to move in an extension direction of the guide member 12, and the guide member 12 extends in a direction from the first position P1 to the second position P2, so as to facilitate movement of the travel mechanism 20 along the guide member 12 to the first position P1 and the second position P2 on the frame 10.

Both the sliding space 13 and the guide member 12 are provided for the travel mechanism 20 to move to the first position P1 and the second position P2, providing the basis for the harvester 1000 to adjust its own operating state according to the position of the travel mechanism 20.

Referring to FIG. 2 again, the travel mechanism 20 includes a sliding structure 21 and a travel structure 22. The sliding structure 21 is slidably arranged on the frame 10, and the sliding structure 21 has the first position P1 and the second position P2 relative to the frame 10. The travel structure 22 is rotatably connected to the sliding structure 21. When the sliding structure 21 is in the first position P1, the harvester 1000 stops operating; and when the sliding structure 21 is in the second position P2, the state of the harvester 1000 remains unchanged.

Specifically, the sliding structure 21 is the at least part of the travel mechanism 20 located in the sliding space 13. The sliding structure 21 is connected to the travel structure 22, the travel structure 22 in a suspended state may drive the sliding structure 21 to slide from the second position P2 toward the first position P1 under the action of gravity, and when the sliding structure 21 is in the first position P1, the harvester 1000 stops operating.

The travel structure 22 is rotatably connected to the sliding structure 21, and when the travel mechanism 20 encounters an obstacle while travelling on the travel road, the travel structure 22 abuts against the obstacle and rotates away from the travel road, so as to facilitate the travel structure 22 to move over the obstacle. Optionally, the obstacles include, but are not limited to, grass roots, tree branches, stones, etc. on the ground.

Referring to FIG. 2 again, the travel structure 22 includes a connecting member 223 and a travel wheel 224. The connecting member 223 is rotatably connected to the sliding structure 21, and the end of the connecting member 223 away from the sliding structure 21 is movably connected to the travel wheel 224.

Specifically, when the travel wheel 224 encounters an obstacle or is suspended during travel, the connecting member 223 may be driven to move away from the travel road, and the connecting member 223 may rotate away from the travel road relative to the sliding structure 21.

It should be noted that, optionally, the sliding structure 21 may be connected to at least one travel structure 22, and the sliding structure 21 may also be connected to two, three or more travel structures 22.

The operating process of the off-ground detection device 1 will be described below by taking the sliding structure 21 being connected to two travel structures 22 as an example, which should not be construed as a limitation on the off-ground detection device 1 described in the present application.

Reference is made to FIGS. 2 and 3. FIG. 3 is a second schematic diagram of a structure the off-ground detection device according to an embodiment of the present application. Specifically, the travel structure 22 includes a first travel structure 221 and a second travel structure 222. The first travel structure 221 and the second travel structure 222 are respectively arranged on opposite sides of the sliding structure 21. The first travel structure 221 includes a first connecting member 2231 and a first travel wheel 2241. The second travel structure 222 includes a second connecting member 2232 and a second travel wheel 2242, and the first connecting member 2231 and the second connecting member 2232 are respectively connected to the opposite sides of the sliding structure 21.

In an embodiment, when both the travel structures 22 of the travel mechanism 20 travel to a height-discontinuous surface similar to a step and both the first travel structure 221 and the second travel structure 222 are in a suspended state, the first travel wheel 2241 and the second travel wheel 2242 move toward the travel road relative to the frame 10 due to their own gravity, and drive the first connecting member 2231 and the second connecting member 2232 to move toward the travel road, which in turn drives the sliding structure 21 to move toward the travel road, that is, the sliding structure 21 moves toward the first position P1 until the sliding structure 21 is in the first position P1, at which time the harvester 1000 stops operating.

In another embodiment, when the second travel structure 222 of the travel mechanism 20 travels to a height-discontinuous surface similar to a step and the second travel structure 222 is in a suspended state, the second travel wheel 2242 moves toward the travel road relative to the frame 10 due to its own gravity, and drives the second connecting member 2232 to move toward the travel road, that is, the second travel structure 222 moves toward the first position P1 relative to the sliding structure 21; and the first travel structure 221 moves toward the second position P2 relative to the sliding structure 21, such that both the first travel wheel 2241 of the first travel structure 221 and the second travel wheel 2242 of the second travel structure 222 abut against the travel road, the sliding structure 21 is in a third position, and the harvester 1000 is maintained in the operating state, the third position being located between the first position P1 and the second position P2.

Optionally, in this embodiment, the first connecting member 2231 and the second connecting member 2232 are fixedly connected to each other. In other embodiments, the first connecting member 2231 and the second connecting member 2232 may be connected to each other in a manner including but not limited to rotatable connection.

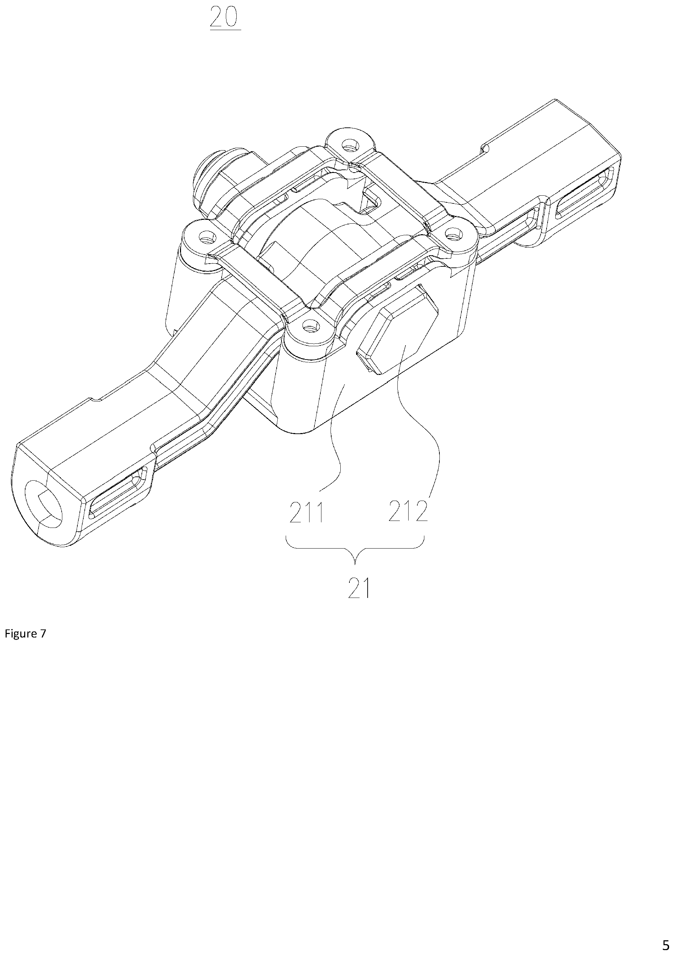

Referring to FIG. 7, in an embodiment, the ends of the first connecting member 2231 and of the second connecting member 2232 close to the sliding structure 21 are bent, and the first connecting member 2231 and the second connecting member 2232 are connected to each other to form an arch structure to increase the ground clearance of the sliding structure 21, so as to increase the ground clearance of the frame 10, thereby improving the cross-country capability of the harvester 1000 and its ability to travel under complex road conditions. The arch structure is bent away from the travel road. The first connecting member 2231 and the second connecting member 2232 are connected to each other to form the arch structure that is substantially zigzag-shaped. The sliding structure 21 has a larger ground clearance than the ends of the first connecting member 2231 and of the second connecting member 2232 away from the sliding structure 21. In other embodiments, the first connecting member 2231 and the second connecting member 2232 may also be configured as a linear structure.

Reference is made to FIGS. 2 and 7. FIG. 7 is a schematic diagram of a partial structure of the travel mechanism according to an embodiment of the present application. The sliding structure 21 includes a slider 211 and a rotating shaft 212. The slider 211 is slidably arranged inside the sliding space 13 and is slidable between the first position P1 and the second position P2 on the frame 10. The rotating shaft 212 is connected to the slider 211, and the rotating shaft 212 is rotatably connected to the travel structure 22, such that the travel structure 22 is rotatable relative to the sliding structure 21.

The rotating shaft 212 and the slider 211 are fixedly connected to each other. Optionally, the rotating shaft 212 and the slider 211 are fixedly connected to each other in a manner including, but not limited to, threaded connection, snap-fit connection, and riveting.

Specifically, the rotating shaft 212 is rotatably connected to the travel structure 22, and the travel structure 22 drives, when in a suspended state, the rotating shaft 212 to move, so as to drive the slider 211 to slide along the guide member 12, and the required operating state of the harvester 1000 is determined according to the position of the slider 211.

The travel structure 22 drives the slider 211 to slide by means of the rotating shaft 212 connected to the travel structure, such that when the harvester 1000 is operating in an abnormal state, the travel structure 22 can quickly drive the slider 211 to slide by means of the rotating shaft 212, and stop the harvester 1000 from operating according to the position of the slider 211. The slider 211 is configured to be slidably connected to the guide member 12, so as to improve the smoothness of positional movement of the slider 211.

Referring to FIG. 2 again, the off-ground detection device 1 further includes a sensor 30 and a controller 50. The sensor 30 is electrically connected to the controller 50, the sensor 30 is configured to send a first signal when the travel mechanism 20 is in the first position P1, and the controller 50 is configured to control the harvester 1000 to stop operating according to the first signal.

In this embodiment, the sensor 30 is arranged on a side of the frame 10 close to the first position P1, and the sensor 30 is configured to sense the position of the slider 211 in the travel mechanism 20. The controller 50 is arranged in the harvester 1000.

Specifically, in an embodiment, when the harvester 1000 travels to a height-discontinuous surface similar to a step, both the travel structures 22 of the travel mechanism 20 are in a suspended state, and the two travel wheels 224 drive the corresponding connecting members 223 to move toward the travel road, so as to drive the rotating shaft 212 and the slider 211 to move toward the travel road. When the slider 211 slides to the first position P1, the sensor 30 detects the slider 211 and then sends the first signal to the controller 50, and the controller 50 controls the harvester 1000 to stop operating according to the first signal.

Optionally, the sensor 30 includes, but is not limited to, a contact sensor, an infrared sensor, a photoelectric sensor or other types of sensors. In an embodiment, the sensor 30 is a microswitch (a contact sensor).

Reference is made to FIGS. 2, 6 and 7. In an embodiment, the sliding structure 21 is provided with a guide hole through which the guide member 12 passes. The guide member 12 may be configured as a columnar structure. The aperture of the guide hole is larger than the diameter of the guide member 12, and thus an outer wall of the guide member 12 is spaced apart from an inner wall of the guide hole, so that the sliding structure 21 can not only move in an extension direction of the guide member 12 but also deflect relative to the guide member 12. The sensor 30 is arranged on a side of the sliding structure 21 close to the cutter deck structure 3. Specifically, the side of the slider 211 close to the cutter deck structure 3 and the side of the slider away from the cutter deck structure 3 are each provided with the guide hole through which the guide member 12 passes. The slider 211 may deflect relative to the guide member 12. The sensor 30 is arranged on the side of the slider 211 close to the cutter deck structure 3.

It should be appreciated that in some cases where a front end of the harvester 1000 is lifted by an external force, while a rear end of the harvester 1000 is not lifted, or the rear end of the harvester 1000 is lifted but the sensor 30 is not triggered, the cutter deck structure 3 of the harvester 1000 can still be in the operating state, and no safety accident will occur. The front end of the harvester 1000 may be the side of the harvester 1000 corresponding to the sliding structure 21 moving away from the cutter deck structure 3, and the rear end of the harvester 1000 may be the side of the harvester 1000 corresponding to the sliding structure 21 moving close to the cutter deck structure 3. For example, when the harvester 1000 is making a turn, the front end of the harvester 1000 hits an obstacle and is lifted. When the harvester 1000 continues to turn, the front end of the harvester 1000 will be separated from the obstacle, and at this time, the obstacle will not affect the safe use of the harvester 1000, that is, in this case, the sensor 30 does not need to be triggered. In this embodiment, the sensor 30 is arranged on the side of the slider 211 close to the cutter deck structure 3. When the front end of the harvester 1000 is lifted but the rear end is not lifted, the frame 10 deflects relative to the travel mechanism 20, that is, the guide member 12 deflects relative to the sliding structure 21, so that the distance between the side of the frame 10 away from the cutter deck structure 3 and the sliding structure 21 is reduced, and the distance between the side of the frame 10 close to the cutter deck structure 3 and the sliding structure 21 does not meet triggering conditions of the sensor 30. In other words, the distance between the side of the slider 211 away from the cutter deck structure 3 and the frame 10 is reduced, the side of the slider 211 close to the cutter deck structure 3 abuts against one end of the guide member 12, and the distance between the side of the slider 211 close to the cutter deck structure 3 and the frame 10 does not meet the triggering conditions of the sensor 30, such that the sensor 30 is not triggered, which avoids affecting normal operation of the harvester 1000 while ensuring the safe use of the harvester 1000.

In some cases where the rear end of the harvester 1000 is lifted by an external force, for example, where the rear end of the harvester 1000 is lifted as a result of the rear end of the harvester 1000 abutting against an obstacle when the rear end of the harvester 1000 hits the obstacle during the travel of the harvester 1000, if the harvester 1000 continues to travel, the obstacle will come into contact with the cutter deck structure 3 and then cause a safety accident, so that the harvester 1000 needs to stop operating. In this embodiment, the sensor 30 is arranged on the side of the slider 211 close to the cutter deck structure 3. When the rear end of the harvester 1000 is lifted, the frame 10 moves toward the sliding structure 21 along the guide member 12, and after the distance between the side of the slider 211 close to the cutter deck structure 3 and the frame 10 meets the triggering conditions of the sensor 30, the sensor 30 is triggered, which in turn causes the harvester 1000 to stop operating, so as to avoid a safety accident of the harvester 1000.

In this way, the sensor 30 is arranged on the side of the slider 211 close to the cutter deck structure 3, which can ensure the safe use of the harvester 1000 and also prevent the sensor 30 from being triggered by mistake, thereby improving the detection accuracy of the off-ground detection device 1 and improving the operating efficiency of the harvester 1000.

Referring to FIGS. 2, 4, 6 and 7, in an embodiment, in the harvester 1000, a chassis corresponding to the position of the sliding structure 21 is obliquely arranged, and the height of a side of the chassis away from the cutter deck structure 3 relative to the travel road is greater than the height of a side of the chassis close to the cutter deck structure 3 relative to the travel road. The frame 10 is fixedly connected to the chassis. When the harvester 1000 hits an obstacle, the side of the chassis away from the cutter deck structure 3 first abuts against the obstacle, and at this time, the frame 10 deflects relative to the travel mechanism 20, and the sensor 30 is not triggered. When the side of the chassis close to the cutter deck structure 3 abuts against the obstacle, the chassis drives the sliding structure 21 to move in a direction away from the travel road to enable the sliding structure 21 to move along the guide member 12 to the second position P2, and the sensor 30 is triggered. In this way, the sensor 30 is triggered only when the side of the chassis close to the cutter deck structure 3 abuts against the obstacle, which can ensure the safe use of the harvester 1000 and also prevent the sensor 30 from being triggered by mistake, thereby improving the detection accuracy of the off-ground detection device 1 and improving the operating efficiency of the harvester 1000.

Referring to FIG. 2 again, the off-ground detection device 1 further includes a cushion structure 40. The cushion structure 40 is fixed to the frame 10, and the cushion structure 40 is connected to the connecting member 223 to cushion an impact on the travel mechanism 20. It should be noted that the number of the cushion structures 40 may be the same as or different from the number of the travel structures 22. In this embodiment, the number of the cushion structures 40 is equal to the number of the travel structures 22.

The cushion structure 40 abuts against the connecting member 223, and may provide a downward force on the travel mechanism 20 to prevent the connecting member 223 from swinging away from the travel road when the travel mechanism 20 moves over the obstacle.

The cushion structure 40 includes a cushion mount 41 and an elastic member 42. The cushion mount 41 connects the frame 10 to the elastic member 42, the elastic member 42 is connected to the connecting member 223, and the elastic member 42 may cushion an impact on the travel mechanism 20.

It should be noted that in this embodiment the elastic member 42 abuts against the connecting member 223. When the harvester 1000 works on the horizontal travel road, the frame 10 moves toward the horizontal travel road due to its own gravity, and the travel mechanism 20 moves to the second position P2 relative to the frame 10, the elastic member 42 is elastically deformed and exerts an elastic force onto the cushion mount 41 against the horizontal travel road, so as to prevent the frame 10 from continuing to move toward the horizontal travel road relative to the travel mechanism 20 to avoid damage to the harvester 1000 as a result of collision between the frame 10 and the travel mechanism 20. Specifically, when the travel mechanism 20 is in the second position P2, the elastic force of the elastic member 42 and a downward force generated by the frame 10 at the sliding structure 21 are balanced, and the positional relationship between the frame 10 and the travel mechanism 20 is relatively stable, that is, the height and the structure of the harvester 1000 in the first direction are relatively stable.

Optionally, the elastic member 42 may be, but not limited to, a spring, an elastic sleeve such as a silicone sleeve and a rubber sleeve, an elastic block, or other elastically deformable components.

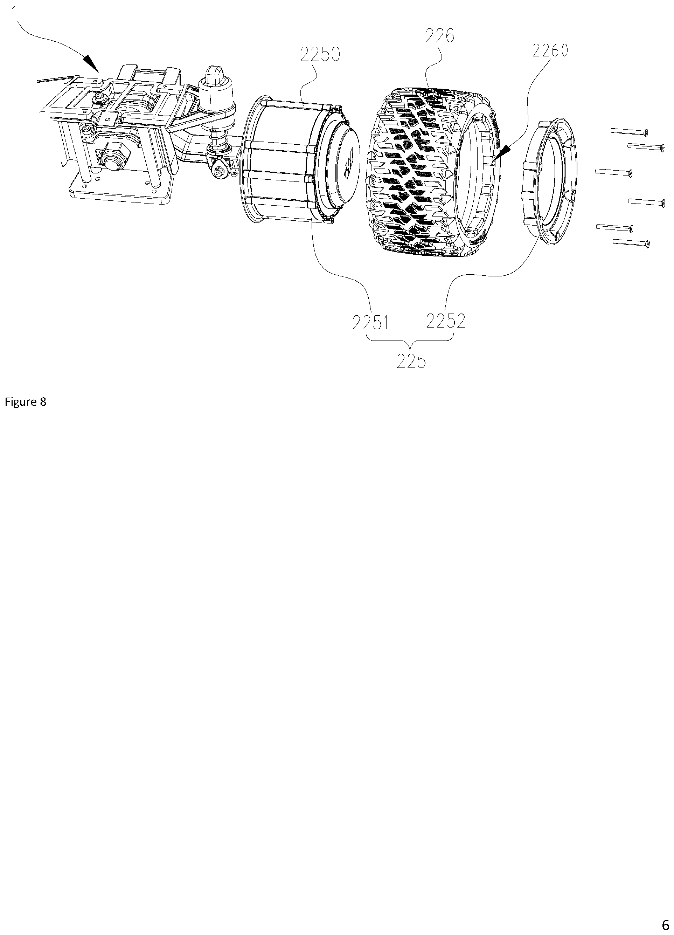

Reference is made to FIGS. 2 and 8. FIG. 8 is a schematic diagram of a structure of a travel wheel according to an embodiment of the present application. Each travel wheel 224 includes a hub motor 225 and a tyre 226. That is, the harvester 1000 is of a four-wheel-drive type, and the multiple hub motors 225 provide greater power for the harvester 1000, thereby improving the cross-country capability of the harvester 1000.

The hub motor 225 has an outer peripheral surface and at least one protrusion 2250 located on the outer peripheral surface, and the tyre 226 has an inner peripheral surface and at least one groove 2260 located on the inner peripheral surface. The tyre 226 is sleeved on the outer peripheral surface of the hub motor 225, and the protrusion 2250 is clamped in the groove 2260.

Specifically, in an embodiment, the groove 2260 may engage with the protrusion 2250, so as to prevent the hub motor 225 and the tyre 226 from rotating relative to each other. The fitting between the protrusion 2250 and the groove 2260 allows the tyre 226 to be fixed to the hub motor 225, so as to prevent displacement of the tyre 226 relative to the hub motor 225.

The hub motor 225 includes a motor body 2251 and a hub cap 2252. The motor body 2251 and the hub cap 2252 are movably connected to each other, a baffle is provided on the hub cap 2252, and the baffle is configured to prevent the tyre 226 from deflecting relative to the motor body 2251. Specifically, the travel wheel 224 is mounted in the following order: the tyre 226 is sleeved on the motor body 2251, then the hub cap 2252 is connected to the motor body 2251, and the baffle of the hub cap 2252 and a baffle of the hub motor 225 separately abut against the tyre 226 in a snap-fit manner, such that the tyre 226 may not deflect relative to the motor body 2251. Optionally, the hub cap 2252 is connected to the motor body 2251 in a manner including but not limited to threaded connection.

Some of the embodiments of the present application are described above, and it should be noted that for those of ordinary skill in the art, several improvements and modifications can also be made without departing from the principle of the present application, and these improvements and modifications are also considered to be within the scope of protection of the present application.

## Claims

1. An off-ground detection device applicable to a harvester, **characterized in that** the off-ground detection device comprises:
a frame; and
a travel mechanism movably arranged on the frame, the travel mechanism having a first position and a second position relative to the frame, wherein when the travel mechanism is in the first position, the harvester stops operating, and when the travel mechanism is in the second position, the state of the harvester remains unchanged.

2. The off-ground detection device according to claim 1, **characterized in that** the travel mechanism comprises a sliding structure and a travel structure, wherein the sliding structure is slidably arranged on the frame and has the first position and the second position relative to the frame, and the travel structure is rotatably connected to the sliding structure, wherein when the sliding structure is in the first position, the harvester stops operating, and when the sliding structure is in the second position, the state of the harvester remains unchanged.

3. The off-ground detection device according to claim 2, **characterized in that** the travel structure comprises a connecting member and a travel wheel, wherein the connecting member is rotatably connected to the sliding structure, and an end of the connecting member away from the sliding structure is movably connected to the travel wheel.

4. The off-ground detection device according to claim 3, **characterized in that** the travel structure comprises a first travel structure and a second travel structure respectively arranged on opposite sides of the sliding structure, wherein when the first travel structure moves toward the second position relative to the sliding structure, the second travel structure moves toward the first position relative to the sliding structure, such that both a travel wheel of the first travel structure and a travel wheel of the second travel structure abut against a travel road, the sliding structure is in a third position, and the harvester is maintained in the operating state, the third position being located between the first position and the second position.

5. The off-ground detection device according to claim 4, **characterized in that** the first travel structure comprises a first connecting member, and the second travel structure comprises a second connecting member, wherein ends of the first connecting member and of the second connecting member close to the sliding structure are both bent, and the first connecting member and the second connecting member are connected to each other to form an arch structure.

6. The off-ground detection device according to claim 2, **characterized in that** the sliding structure comprises a slider and a rotating shaft, wherein the rotating shaft is connected to the slider, and the rotating shaft is rotatably connected to the travel structure, such that the travel structure is rotatable relative to the sliding structure.

7. The off-ground detection device according to claim 3, **characterized in that** the off-ground detection device further comprises a cushion structure, wherein the cushion structure is fixed to the frame and connected to the connecting member to cushion an impact on the travel mechanism; and
the cushion structure comprises a cushion mount and an elastic member, the cushion mount being connected to the frame and the elastic member, and the elastic member being connected to the connecting member and cushioning the impact on the travel mechanism.

8. The off-ground detection device according to claim 2, **characterized in that** the frame has a sliding space extending in an arrangement direction of the first position and the second position, and a slider is slidably arranged inside the sliding space and is slidable between the first position and the second position.

9. The off-ground detection device according to claim 2, **characterized in that** the off-ground detection device further comprises a sensor and a controller, wherein the sensor is electrically connected to the controller and is configured to send a first signal when the travel mechanism is in the first position, and the controller is configured to control the harvester to stop operating according to the first signal.

10. The off-ground detection device according to claim 3, **characterized in that** the travel wheel comprises a hub motor and a tyre, wherein the hub motor has an outer peripheral surface and at least one protrusion located on the outer peripheral surface, and the tyre has an inner peripheral surface and at least one groove located in the inner peripheral surface; and the tyre is sleeved on the outer peripheral surface of the hub motor, and the protrusion is clamped in the groove.

11. A harvester, **characterized by** comprising:
an off-ground detection device according to any one of claims 1 to 10; and
a cutter deck structure mounted on a frame and configured for harvesting.
